# EUROPEAN PATENT SPECIFICATION

(11) **EP 2 554 286 B1**
(45) Date of publication and mention of the grant of the patent: **12.06.2019**
(21) Application number: 11759587.6
(22) Date of filing: 25.03.2011
(51) Int. Cl.: B21C 37/08, B21C 37/083, B21C 51/00, B23K 31/00

(54) **METHOD AND APPARATUS FOR MANUFACTURING UOE STEEL PIPE**
VERFAHREN UND VORRICHTUNG ZUR HERSTELLUNG EINES UOE-STAHLROHRS
PROCÉDÉ ET DISPOSITIF DE FABRICATION D'UN TUYAU D'ACIER UOE

(30) Priority: 26.03.2010 JP 2010072627
(43) Date of publication of application: 06.02.2013
(73) Proprietor: Nippon Steel & Sumitomo Metal Corporation, Tokyo 100-8071 (JP)
(72) Inventor: WATANABE Yasushi, Osaka-shi Osaka 541-0041 (JP)
(74) Representative: Zimmermann & Partner Patentanwälte mbB
(86) International application number: PCT/JP2011/057389
(87) International publication number: WO 2011/118783

(56) References cited:
- JP-A- 6 137 853
- JP-A- 61 217 747
- JP-A- 2003 287 406
- JP-A- 2005 288 471
- JP-A- 2009 148 797

## Description

### Technical Field

The present invention relates to a manufacturing method and manufacturing apparatus for a UOE steel pipe or tube (hereinafter referred to as "pipe" when deemed appropriate). To be specific, it relates to a method and apparatus for manufacturing a UOE steel pipe while suppressing manufacturing man-hours and a deterioration of yield by, for example, accurately measuring the cross-sectional shape of a bevel that is formed in an edge part of a thick plate which is a blank steel plate.

### Background Art

In a typical manufacturing process of a UOE steel pipe, a cutting machine is first used to bevel an edge part of a steel plate, which is the starting material, in preparation for welding. In particular, in manufacturing of a large diameter UOE steel pipe having an outer diameter of about 51 to 152 cm (20 to 60 inches), beveling is carried out for forming a bevel for welding by a cutting machine called an edge planer with a cemented carbide bite to cut out an edge part of a thick plate (a plate thickness of 6 to 50 mm) in accordance with its outer diameter.

The beveled steel plate is successively subjected to C-pressing, U-pressing, and O-pressing into an open-pipe having an O-shape cross section. Thereafter, the edge parts of the open pipe, which have beveled, are butted together and welded, and thereafter an expansion processing is carried out to form a UOE steel pipe.

For example, Patent Literature 1 (JP2005-288471A) discloses a method for manufacturing a UOE steel pipe, including a step of providing a bevel in an edge part thereof by milling.

Patent Literature 2 (JP2003-287406) discloses a groove dimensions-measuring apparatus comprises a camera 2 that is separated from the groove 10 by a specific distance and is fixed, an inputting apparatus 4 for inputting the image of the groove section that is imaged by the camera 2, and an analyzer 5 connected to the inputting apparatus 4. Or further, plate thickness/groove dimensions setting values that are inputted to the analyzer are separately compared to judge whether the measured groove dimensions are conforming or not.

### Summary of Invention

### Technical Problem

In a conventional manufacturing process of UOE steel pipe, in order to determine whether or not a normal bevel has been formed by beveling, it is necessary to sample a welding bead of a pipe end surface of the UOE steel pipe after welding, grind the end surface of the sampled welding bead by using a file and a grinding stone, and further estimate the bevel shape from the bead shape after pickling.

This means that, after the edge parts of the open pipe are welded together, there is no other way to determine whether or not the bevel shape is appropriate than to estimate it based on the fused state between the weld metal and the base metal, and it takes much time until to determine that the bevel shape is not appropriate.

Further, even if it is assumed that a defect of bevel shape of one manufactured UOE steel pipe can be observed and found after welding, similar inappropriate beveling may have been performed when the defect has been found, on a large number of thick plates, which are the starting material of many other UOE steel pipes that are manufactured following the aforementioned one UOE steel pipe. For this reason, since it becomes necessary to additionally cut the bevels of the large number of thick plates, the production efficiency of UOE steel pipe will be significantly deteriorated.

In particular, if a thick plate is fed to a C-press machine in the next process with a machined chip attached to the bevel, which has been generated during beveling, the machined chip, if detached from the bevel during C-pressing, falls into the die of the C-press machine and adheres to the die. Thus, a further problem is that the machined chip adhering to the die of the C-press machine causes a dent flaw on the outer surface of the UOE steel pipe, which is made of a thick plate as a starting material that is to be fed to the C-press machine after the above described thick plate.

These are technical problems that are desired to be solved promptly, because they directly lead to an increase in manufacturing man-hours and a decline of yield of the UOE steel pipe.

### Solution to Problem

The present invention is a method for manufacturing a UOE steel pipe or tube according to claim 1.

From another aspect, the present invention is an apparatus for manufacturing a UOE steel pipe or tube according to claim 4.

According to the invention, the shape of the bevel is measured by a light-section method that irradiates the edge part of the above described steel plate with a linear laser beam that expands in the thickness direction of the above described steel plate.

In an aspect of the present invention, it is preferable that a plurality of the above described linear laser beams are applied in the conveyance direction of the above described steel plate.

Further, in an aspect of the present invention, it is preferable that after the above described bevel is formed, the above described steel plate is conveyed with a conveyor roller up to the C-press machine which applies C-press, and the shape of the above described bevel is measured in the vicinity of the conveyor roller and at an exit side of the conveyance direction of the above described steel plate.

### Advantageous Effects of Invention

According to the present invention, it is possible to accurately measure the cross-sectional shape of the bevel formed in the edge part of the blank steel plate, for example, a thick plate etc. before C-pressing is started, and specifically it is possible to determine whether or not the shape of the bevel formed in the edge part of the steel plate by a beveling device, namely an edge planer, is appropriate by using a dedicated bevel-shape measurement device for measuring the bevel shape of the blank steel plate, and quickly output the need for modifying the shape of the bevel to the operator when necessary. This makes it possible to manufacture a UOE steel pipe or tube while preventing an increase in man-hours and a decline of yield caused by inappropriateness of the shape of the bevel.

### Brief Description of Drawings

Figure 1 is an explanatory diagram to schematically show the outline of an embodiment of the present invention.
Figure 2 is an explanatory diagram to show an example of the shape of the bevel of the thick plate.
Figure 3 is an explanatory diagram to show a situation where the two-dimensional laser range meters measure the shape of the bevels of the thick plate.
Figure 4A is an explanatory diagram to show a case where the thick plate has a semicylindrical shape, and Figure 4B is an explanatory diagram to show a case where a front edge of the thick plate has a warped shape.
Figure 5 is an explanatory diagram to show the positional relationship between the conveyor roller and the bevel-shape measurement device.
Figure 6 is a graph to show an example of the measurement result of the shape of the bevel by the bevel-shape measurement device.
Figure 7 is an explanatory diagram to schematically show the procedure of a test for verifying that the bevel-shape measurement device can detect the presence or absence of a foreign substance.
Figure 8 is a graph to show an example of the result of the test shown in Figure 7.
Figure 9 is a graph to show an example of the result of the test shown in Figure 7.
Figure 10 is a graph to show an example of the result of the test shown in Figure 7.
Figure 11 is a graph to show an example of the result of the test shown in Figure 7.

### Description of Embodiments

Hereafter, an embodiment for carrying out the present invention will be described with reference to the appended drawings.

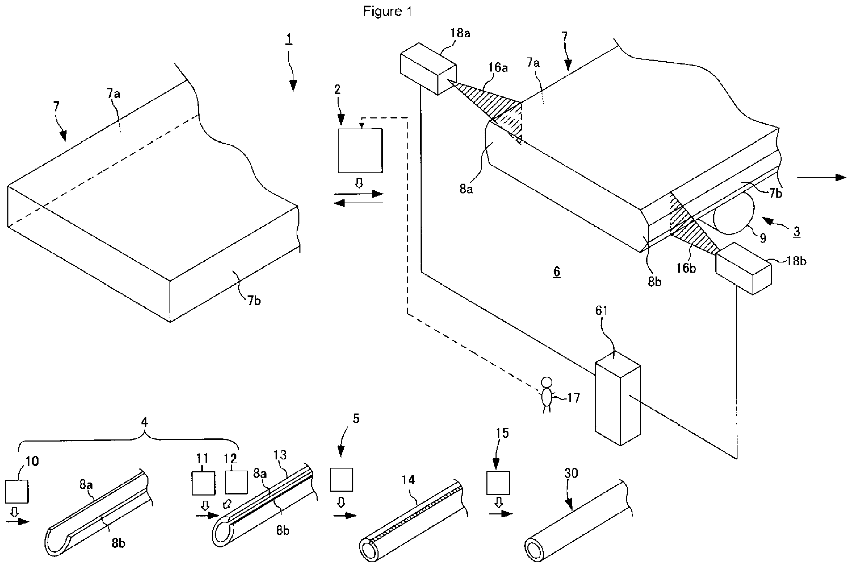

First, the manufacturing apparatus relating to the present embodiment will be described. Figure 1 is an explanatory diagram to schematically show the outline of the present embodiment.

As shown in Figure 1, a manufacturing apparatus 1 relating to the present embodiment includes a beveling device 2, a conveyance system 3, a steel pipe forming device 4, a welding device 5, and a bevel-shape measurement device 6. Hereafter, these components will be successively described.

### <Beveling device>

The beveling device 2 is a device for forming a bevel in edge parts 7a and 7b of a thick plate (a steel plate having a plate thickness of about 6 to 50 mm) 7 which is the starting material of a large diameter UOE steel pipe 30 having an outer diameter of about 51 to 152 cm (20 to 60 inches).

As the beveling device 2, a known, ordinary device is used, namely an edge planer, that uses a cemented carbide bite for performing the machining of the edge parts 7a and 7b of the thick plate 7.

Since the beveling device 2 is well known to one skilled in the art, further description on the beveling device 2 will be omitted.

### <Conveyance system>

The conveyance system 3 is a device for conveying the thick plate 7, whose edge parts 7a and 7b are provided with bevels 8a and 8b, to the steel pipe forming device 4. The conveyance system 3 is made up of a large number of conveyor rollers 9 which are placed side by side in the conveyance direction.

After the bevels 8a and 8b are formed, the thick plate 7 is conveyed by the large number of conveyor rollers 9 making up the conveyance system 3 to a C-press machine 10 where C-pressing is carried out.

Since the conveyance system 3 is well known to one skilled in the art, further description on the conveyance system 3 will be omitted.

### <Steel pipe forming device>

The steel pipe forming device 4 is a device including a C-press machine 10, a U-press machine 11, and an O-press machine 12, and for shaping the thick plate 7, which is provided with bevels 8a and 8b, into an open pipe 13.

Since the steel pipe forming device 4 is well known to one skilled in the art, further description on the steel pipe forming device 4 will be omitted.

### <Welding device>

The welding device 5 is a device for butting the bevels 8a and 8b of the open pipe 13 together and welding the same. Since the welding device 5 is well known to one skilled in the art, further description on the welding device 5 will be omitted.

It is noted that the steel pipe 14 which has been welded by the welding device 5 is subjected to expansion processing by an expansion processing device 15 into a UOE steel pipe 30 which is the product.

### <Bevel-shape measurement device>

A bevel-shape measurement device 6 is a device disposed between the beveling device 2 and the C-press machine 10 and for measuring the shape of the bevels 8a and 8b of the thick plate 7 before C-pressing by the C-press machine 10 is carried out.

The bevel-shape measurement device 6 determines whether there is a need for modifying the shape of the bevels 8a and 8b of the thick plate 7 before C-pressing is started for the thick plate 7 by the C-press machine 10. The bevel-shape measurement device 6 includes two-dimensional laser range meters 18a and 18b for measuring bevel shapes by a light-section method, and a determination device 61 for determining whether there is a need for modifying the bevel shapes.

A main feature of the manufacturing apparatus 1 is that the bevel-shape measurement device 6 which has a function of detecting the shapes of the bevels 8a and 8b of the thick plate 7 preferably by a light-section method that irradiates the edge parts 7a and 7b of the thick plate 7 with linear laser beams 16a and 16b, and if there is an abnormality in the shapes of the bevels 8a and 8b, notifying the abnormality to the operator 17 is disposed between the beveling device 2 (an edge planer) and the C-press machine 10.

While a UOE steel pipe 30 is generally manufactured by a device in which the bevel-shape measurement device 6 is omitted from the manufacturing apparatus 1 shown in Figure 1, it is often the case that the thick plate 7, which is an intermediate product provided with the bevels 8a and 8b, is put on a temporary standby such as between the beveling device 2 (an edge planer) and the C-press machine 10 because of balancing between the respective process capacities.

In the present embodiment, the bevel-shape measurement device 6 is newly placed immediately downstream the beveling device 2, an edge planer, and a measurement result of the bevel-shape measurement device 6 is fed back to the operator 17 so that the operator 17 can take necessary measures for the bevels 8a and 8b of the thick plate 7 before the C-pressing by the C-press machine 10 is carried out.

The method for the feedback to the operator 17 may be appropriately chosen, without being particularly limited, in accordance with the configuration of manufacturing process: for example, (1) a method of just notifying the operator by issuing an alarm, (2) a method of temporarily halting the conveyance system 3 in automatic fashion with an alarm, and the like.

A difference between an appropriate shape of bevels 8a and 8b which is input in advance and the measured shape of bevels 8a and 8b is detected from a measurement result of the shape of the bevels 8a and 8b of the thick plate 7 by the bevel-shape measurement device 6, and if the difference deviates from a reference range, it can be determined that the shape of the bevels 8a and 8b is defective. It is desirable that, by determining that the shape of the bevels 8a and 8b is defective when a plurality of linear laser beams 16a and 16b are applied in the conveyance direction of the thick plate 7 and two or more cases as described above are detected, it may be possible to prevent accidental malfunctions thereby enhancing the reliability of the bevel-shape measurement device 6.

The measurement of the shape (cross-sectional shape) of the bevels 8a and 8b of the thick plate 7 by the bevel-shape measurement device 6 is carried out by measuring the distance in the width direction of the thick plate between the bevels 8a and 8b of the thick plate 7 and the two-dimensional laser range meters 18a and 18b by using the linear laser beams 16a and 16b. Then, by way of example, a difference from an appropriate cross-sectional shape of the bevels 8a and 8b which is inputted in advance is detected, and when this difference is not less than 5 mm, it is determined that a defective shape has occurred in the bevels 8a and 8b.

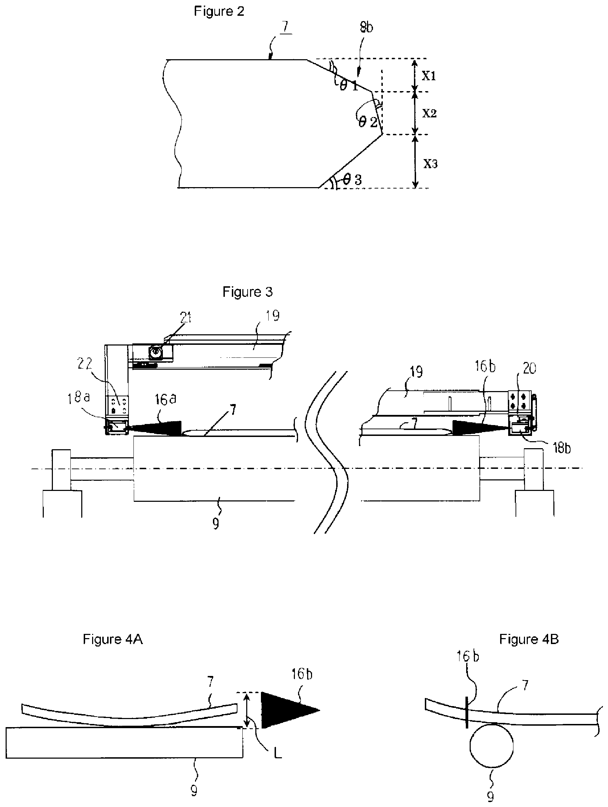

Figure 2 is an explanatory diagram to show an example of the shape of the bevel 8b of the thick plate 7 (the relationship between the angle and the thickness in the plate thickness direction). It is noted that since the bevel 8a is formed in symmetrical with the bevel 8b, Figure 2 will be described by taking the bevel 8b as example.

It is possible to measure angles (θ1 to θ3) of various portions of the bevel 8b, and thicknesses (X1 to X3) in the plate thickness direction having angles (θ1 to θ3) in numeral forms by the bevel-shape measurement device 6. For this reason, the operator 17 can easily adjust the setting of a cemented carbide bite of the beveling device 2 (an edge planer) based on the angles (θ1 to θ3) and the thicknesses (X1 to X3) of the bevel 8b.

Figure 3 is an explanatory diagram to show a situation where the two-dimensional laser range meters 18a and 18b measure the shape of the bevels 8a and 8b of the thick plate 7.

A frame 19 is fixedly disposed by being bridged over across the width of the thick plate 7 above the thick plate 7 to be conveyed by the conveyor roller 9. The two-dimensional laser range meter 18b is fixedly disposed via a bracket 20 which is fixedly disposed on one end side of the frame 19. On one hand, the two-dimensional laser range meter 18a is disposed movably in the width direction of the thick plate 7 via a bracket 22 which is disposed to be movable in the width direction of the thick plate 7 with respect to the frame 19 by a stepping motor 21. This provides the two-dimensional laser range meter 18a that is configured to automatically move to a position suitable for measurement in accordance with the width of the thick plate 7.

Figure 4A is an explanatory diagram to show a case where the thick plate 7 has a semicylindrical shape, and Figure 4B is an explanatory diagram to show a case where a front edge of the thick plate 7 has a warped shape.

The two-dimensional laser range meters 18a and 18b, which measure the cross-sectional shape of a part irradiated with the linear laser beams 16a and 16 by using a light-section method that irradiates the edge parts 7a and 7b of the thick plate 7 with the linear laser beams 16a and 16b, radiate linear laser beams 16a and 16b divergently as shown in Figures 1 and 3. As a result, setting a laser detection range L to be not less than a supposed movable range in the vertical direction of the cross section of the thick plate 7 as shown in Figure 4A makes it possible to measure the shape of the entire cross section of the bevels 8a and 8b of the thick plate 7 even in a case where the thick plate 7 has a semicylindrical shape as shown in Figure 4A, and a case where a front edge of the thick plate 7 has a warped shape as shown in Figure 4B.

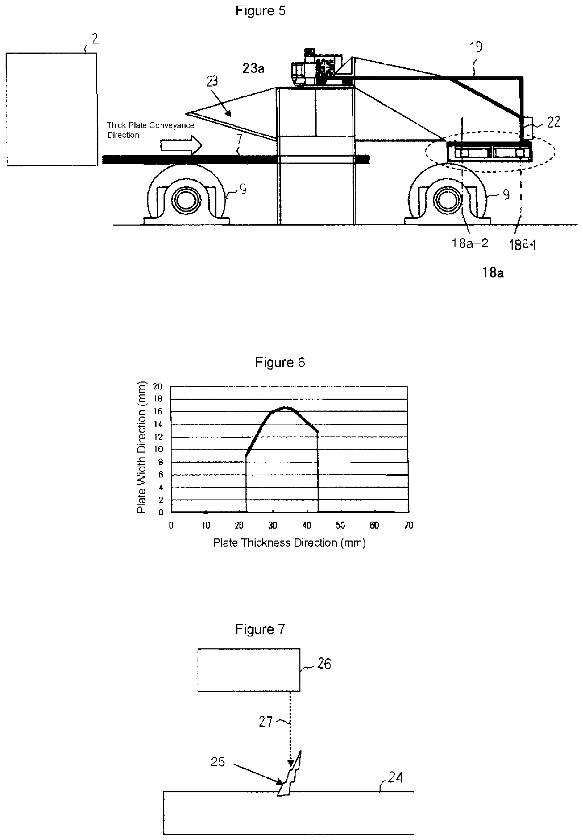

Figure 5 is an explanatory diagram to show the positional relationship between the conveyor roller and the bevel-shape measurement device 6 (the two-dimensional laser range meters 18a and 18b).

Since the thick plate 7 is stably conveyed in the vicinity of the conveyor roller 9, disposing a laser beam radiation port of the two-dimensional laser range meters 18a and 18b near the conveyor roller 9 will make it possible to detect the shape of the bevels 8a and 8b in a stable manner.

The laser beam radiation port of the two-dimensional laser range meters 18a and 18b is preferably disposed on the downstream side of the conveyor roller 9 in the conveyance direction of the thick plate 7, specifically, at a position of about 500 mm on the downstream side of the conveyor roller 9 in the conveyance direction, because a stable measurement becomes possible. As a result, even when the thick plate 7 is relatively thin, the measurement is less likely to susceptible to a warping of the front edge of the thick plate 7, and accurate measurement can be performed.

Further, since the bevels 8a and 8b have a luster like a mirror surface, if the linear laser beams 16a and 16b are radiated in an arrangement such that a specularly reflected light of the linear laser beams 16a and 16b will be incident into light receiving elements of the two-dimensional laser range meters 18a and 18b, the reflected light will become too strong thereby causing noises and accurate measurement becomes difficult. For this reason, it is preferable to dispose the two-dimensional laser range meters 18a and 18b, for example, 5 to 10° inclined with respect to the conveyance direction of the thick plate 7 from the above described arrangement so that the amount of the reflected light is suppressed by slantedly irradiating the bevel with the linear laser beams 16a and 16b.

In this way, it is preferable that the bevel-shape measurement device 6 measures the shape of the bevels 8a and 8b of the thick plate 7 by using the linear laser beams 16a and 16b which expands in the thickness direction of the thick plate 7. Moreover, it is preferable that the bevel-shape measurement device 6 measures the shape of the bevels 8a and 8b in the vicinity of the conveyor roller 9 and at the exit side in the conveyance direction of the thick plate 7.

Figure 6 is a graph to show an example of the measurement result of the shape of the bevel 8b by the bevel-shape measurement device 6. Since the bevel 8b is measured in the thickness direction and the width direction of the thick plate 7 as shown by the graph in Figure 6, the cross-sectional shape of the entire bevel 8b is accurately measured.

It is preferable to arrange side by side a plurality (two in the example shown in Figure 5) of the two-dimensional laser range meters 18a and 18b making up the bevel-shape measurement device 6.

For example, it is preferable that the bevel-shape measurement device 6 measures the shape of the bevels 8a and 8b at a pitch of about 10 mm in the conveyance direction of the thick plate 7, from the viewpoint of the reliability of measured values. Supposing that the conveyance speed of the thick plate 7 is, for example, 60 m/min, it is preferable that two two-dimensional laser range meters 18a-1, 18a-2 and 18b-1, 18b-2 (these are not shown) are arranged on one side in the conveyance direction as shown in Figure 5, and each of the two-dimensional laser range meters 18a-1, 18a-2 and 18b-1, 18b-2 measures the shape of the bevels 8a and 8b of the thick plate 7 at the same period of about 20 ms pitch, and shifts the position of the linear laser beam to be radiated by 10 mm respectively between the two-dimensional laser range meter 18a-1 and the two-dimensional laser range meter 18a-2, and between the two-dimensional laser range meter 18b-1 and the two-dimensional laser range meter 18b-2 to perform measurement accurately at a pitch of 10 mm.

It is desirable to provide a warping suppressor 23 as shown in Figure 5 before the two-dimensional laser range meters 18a and 18b making up the bevel-shape measurement device 6. The warping suppressor 23 has a roof-type steel plate 23a whose height decreases from a plate entrance side toward the plate conveyance direction, and it is possible to suppress a warping of, for example, not less than 80 mm which takes place in the thick plate 7 caused by the roof-type steel plate 23a.

Further, since the bevel-shape measurement device 6 can measure the shape of the bevels 8a and 8b of the thick plate 7 at a high accuracy, it has a foreign-substance adherence detection function to detect not only defects in the shape of the bevels 8a and 8b themselves, but also the presence or absence of adherence of foreign substances (for example, machined chips) to the bevels 8a and 8b (in the present invention, adherence of foreign substances is also regarded as a kind of defective shape).

For example, if the shape measured by the bevel-shape measurement device 6 deviates by 5 mm or more from an appropriate shape, an alarm sounds notifying the operator 17 of adherence of a foreign substance to the bevels 8a and 8b.

Figure 7 is an explanatory diagram to schematically show the procedure of a test for verifying that the bevel-shape measurement device 6 can detect the presence or absence of a foreign substance (for example, machined chips) adhering to the bevels 8a and 8b.

In this test, a machined chip 25 is caused to adhere to various positions of a tentative work 24 which imitates a thick plate, and a linear laser beam 27 is radiated from a two-dimensional laser range meter 26 (trade name LJ-G200 manufactured by KEYENCE CORPORATION) toward the tentative work 24 and the machined chip 25, and the reflection light thereof is detected to measure the shape. The shape is also measured without the machined chip 25 being adhered thereto.

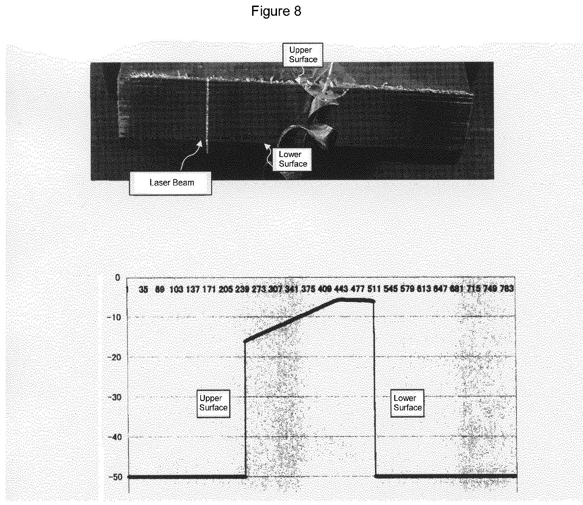

Measurement results are shown in graphs by way of example in Figures 8 to 11. The abscissa in the graphs of Figures 8 to 11 is the distance in the thickness direction of the tentative work 24, and the ordinate is the distance (with a reference distance being 200 mm, measurement is made in a range of ±40 mm therefrom) between the two-dimensional laser range meter 26 and the tentative work 24 or the machined chip 25.

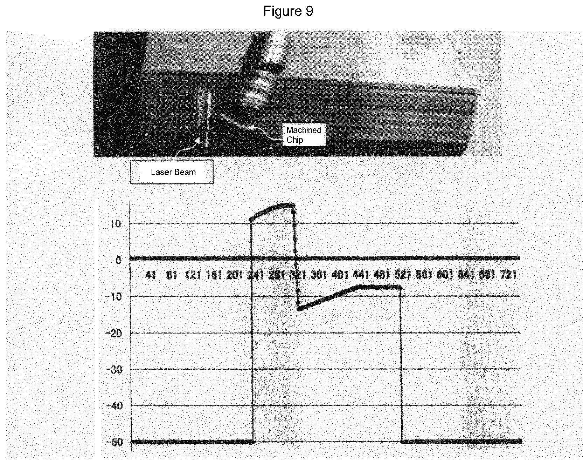

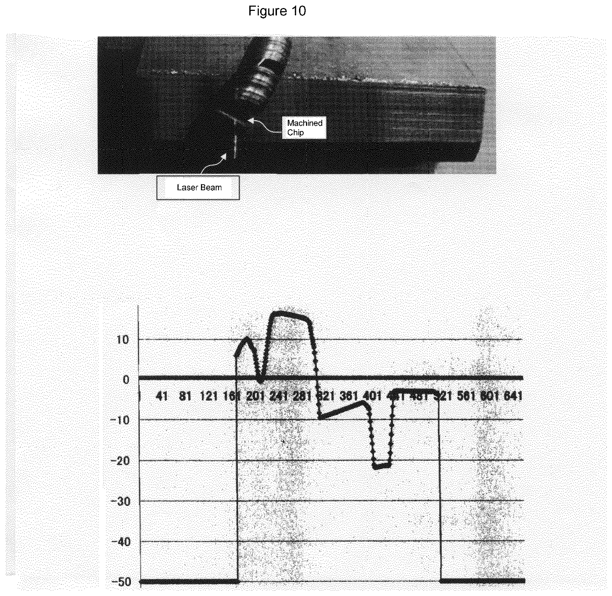

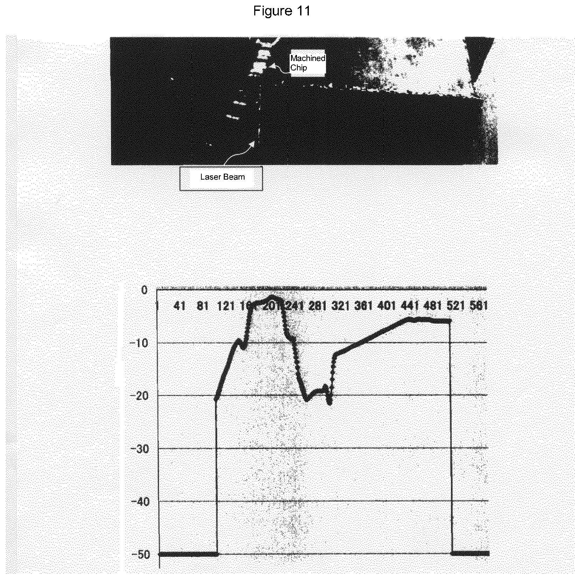

Figure 8 shows a case where a machined chip 25 is not adhering to the tentative work 24, Figure 9 shows a case where a machined chip 25 is adhering to a middle portion of the tentative work 24, Figure 10 shows a case where a machined chip 25 is adhering to a position of 10 mm from the upper surface of the tentative work 24, and further Figure 11 shows a case where a machined chip 25 is adhering to a middle portion of the tentative work 24.

Comparing the graph of Figure 8 with the graphs of Figures 9 to 11, there are clear differences between them, thereby showing that the presence or absence of adherence of a foreign substance (for example, a machined chip) to the bevels 8a and 8b can be reliably detected by the bevel-shape measurement device 6.

Next, the situation of manufacturing a UOE steel pipe 30 by the manufacturing apparatus 1 relating to the present embodiment will be described.

In the present invention, the shape of the bevels 8a and 8b before C-pressing by the C-press machine 10 is carried out is measured as described above by the bevel-shape measurement device 6 on the thick plate 7 in whose edge parts 7a and 7b the bevels 8a and 8b are formed by the beveling device 2.

Then, the bevel-shape measurement device 6 determines whether there is a need for modifying the shape of the bevels 8a and 8b of the thick plate 7 based on the measurement result as described above before C-pressing by the C-press machine 10 is started.

When determining that there is no need for modifying the shape of the bevels 8a and 8b of the thick plate 7, the bevel-shape measurement device 6 does not output an alarm etc. to the operator 17. In this case, the thick plate 7 is fed as-is to the steel pipe forming device 4, and is subjected to C-pressing by the C-press machine 10, U-pressing by the U-press machine 11, and O-pressing by the O-press machine 12 to be shaped into an open pipe 13. The open pipe 13 is fed to the welding device 5, and the bevels 8a and 8b are butted together and welded to be formed into a steel pipe 14; the steel pipe 14 being fed to an expansion processing device 15 and subjected to expansion processing to be formed into a UOE steel pipe 30.

On one hand, when determining that there is a need for modifying the shape of the bevels 8a and 8b of the thick plate 7, the bevel-shape measurement device 6 outputs an alarm etc. to the operator 17. In this case, the operator 17 temporarily stops the beveling device 2 and adjusts the setting of the cemented carbide bite of the beveling device 2 such that appropriate angles (θ1 to θ3) and thicknesses (X1 to X3) are obtained, for example, based on the angles (θ1 to θ3) and the thicknesses (X1 to X3) of the bevels 8a and 8b outputted by the bevel-shape measurement device 6. Then, for all the thick plates which have beveled after the above described thick plate 7, the modification of the shape of the bevels 8a and 8b is performed by the beveling device 2 including the cemented carbide bite of which setting has been adjusted.

Then, the thick plate 7 for which modification of the shape of the bevels 8a and 8b has been thus performed is fed to the steel pipe forming device 4 and is subjected to C-pressing by the C-press machine 10, U-pressing by the U-press machine 11, and O-pressing by the O-press machine 12 to be shaped into an open pipe 13. The open pipe 13 is fed to the welding device 5 so that the bevels 8a and 8b are butted together and welded to form a steel pipe 14, and further the steel pipe 14 is fed to an expansion processing device 15 and subjected to expansion processing to form a UOE steel pipe 30.

In this way, according to the present invention, it is determined whether or not the shape of the bevels 8a and 8b formed in the edge parts 7a and 7b of the thick plate 7 by the beveling device 2, an edge planer, is appropriate by using a dedicated bevel-shape measurement device 6 for measuring the shape of the bevels 8a and 8b of the thick plate 7; and when it is not appropriate, it is possible to quickly output the need for modifying the shape of the bevels 8a and 8b to the operator 17. As a result, it becomes possible to manufacture the UOE steel pipe 30 while preventing an increase in man-hours and a decline of yield caused by abnormalities of the shape of the bevels 8a and 8b.

Moreover, according to the present invention, it becomes possible to very quickly perform the adjustment of the cutting quantity of the cemented carbide bite of the beveling device 2, an edge planer, and to suppress the occurrence of welding defects which have been occurring at the start of the manufacturing of UOE steel pipe so far.

Further, according to the present invention, since it is also possible to detect the presence or absence of a machined chip during beveling which is thermally stuck to and remains to adhere to the bevels 8a and 8b, it is possible to significantly suppress a defective holding down (a dent flaw) of the outer surface of the UOE steel pipe 30 caused by the press working at the steel pipe forming device 4.

### Reference Signs List

- 1: Apparatus for manufacturing UOE steel pipe
- 2: Beveling device
- 3: Conveyance system
- 4: Steel pipe forming device
- 5: Welding device
- 6: Bevel-shape measurement device
- 7: Thick plate
- 7a, 7b: Edge part
- 8a, 8b: Bevel
- 9: Conveyor roller
- 10: C-press machine
- 11: U-press machine
- 12: O-press machine
- 13: Open pipe
- 14: Steel pipe
- 15: Expansion processing device
- 16a, 16b: Linear laser beam
- 17: Operator
- 18a, 18b: Two-dimensional laser range meter
- 18a-1, 18a-2, 18b-1, 18b-2: Two-dimensional laser range meter
- 19: Frame
- 20: Bracket
- 21: Stepping motor
- 22: Bracket
- 23: Warping suppressor
- 24: Tentative work
- 25: Machined chip
- 26: Two-dimensional laser range meter
- 27: Linear laser beam
- 30: UOE steel pipe

## Claims

1. A method for manufacturing a UOE steel pipe or tube in which a steel plate (7) is provided with a bevel (8a, 8b) in an edge part (7a, 7b) thereof by an edge planer, is successively subjected to C-pressing, U-pressing, and O-pressing into an open pipe or tube, and bevels of the open pipe or tube (13) are butted together and welded, wherein
a shape of the bevel (8a, 8b) of the steel plate (7) is measured by a light-section method that irradiates the edge part of the steel plate with a linear laser beam (16a, 16b) which expands in the thickness direction of the steel plate prior to the C-pressing and determination is made based on the measurement result whether there is a need for modifying the shape of the bevel of the steel plate and whether adherence of a foreign substance such as a machined chip is present or absent before the C-pressing is started.

2. The method for manufacturing a UOE steel pipe or tube according to claim 1, wherein
a plurality of the linear laser beams (16a, 16b) are radiated in the conveyance direction of the steel plate (7).

3. The method for manufacturing a UOE steel pipe or tube according to claim 1 or 2, wherein
after the bevel (8a, 8b) is formed, the steel plate is conveyed by a conveyor roller (9) to a C-press machine (10) where the C-pressing is carried out, and the shape of the bevel (8a, 8b) is measured in the vicinity of the conveyor roller (9) and at an exit side of the conveyance direction of the steel plate.

4. An apparatus for manufacturing a UOE steel pipe or tube comprising:
an edge planer which is a beveling device (2) for forming a bevel (8a, 8b) in an edge part (7a, 7b) of a steel plate (7);
a conveyance system (3) for conveying the beveled steel plate;
a steel pipe or tube forming device including a C-press machine (10), a U-press machine (11), and an O-press machine (12), and for shaping the beveled steel plate into an open pipe or tube; and
a welding machine (5) for butting the bevels of the open pipe or tube and welding the same, wherein
the apparatus further comprises a bevel-shape measurement device (6) for measuring the shape of the bevel of the steel plate prior to C-pressing carried out by the C-press machine by a light-section method that irradiates the edge part of the steel plate with a linear laser beam (16a, 16b) which expands in the thickness direction of the steel plate, between the beveling device (2) and the C-press machine (10), and
the bevel-shape measurement device (6) configured for determining whether there is a need for modifying the shape of the bevel of the steel plate and whether adherence of a foreign substance such as a machined chip is present or absent before the C-pressing is started based on the measurement result of the shape of the bevel.

## Patentansprüche

1. Verfahren zur Herstellung eines UOE-Stahlrohrs oder Stahlröhre, bei dem eine Stahlplatte (7), die in einem Kantenteil (7a, 7b) durch einen Kantenhobel mit einer Schräge (8a, 8b) versehen wurde, sukzessive einem C-Pressvorgang, U-Pressvorgang und O-Pressvorgang zu einem offenen Rohr oder einer offenen Röhre unterzogen wird, und Schrägen des offenen Rohrs oder der offenen Röhre (13) aneinander in Anlage gebracht und verschweißt werden, wobei
eine Form der Schräge (8a, 8b) der Stahlplatte (7) durch ein Lichtschnittverfahren vermessen wird, welches das Kantenteil der Stahlplatte mit einem linearen Laserstrahl (16a, 16b), der in der Dickenrichtung der Stahlplatte expandiert, vor dem C-Pressvorgang bestrahlt, und eine Bestimmung aufgrund des Vermessungsergebnisses erfolgt, bevor der C-Pressvorgang begonnen wird, ob eine Notwendigkeit besteht, die Form der Schräge der Stahlplatte zu modifizieren und ob ein Anhaften eines Fremdkörpers wie etwa eines Bearbeitungsspans vorliegt oder nicht vorliegt.

2. Verfahren zur Herstellung eines UOE-Stahlrohrs oder Stahlröhre nach Anspruch 1, wobei
mehrere der linearen Laserstrahlen (16a, 16b) in der Förderrichtung der Stahlplatte (7) abgestrahlt werden.

3. Verfahren zur Herstellung eines UOE-Stahlrohrs oder Stahlröhre nach Anspruch 1 oder 2, wobei,
nachdem die Schräge (8a, 8b) ausgebildet wurde, die Stahlplatte durch eine Förderwalze (9) zu einer C-Pressmaschine (10) befördert wird, wo der C-Pressvorgang durchgeführt wird, und die Form der Schräge (8a, 8b) im Nahbereich der Förderwalze (9) und an einer Austrittsseite der Förderrichtung der Stahlplatte vermessen wird.

4. Vorrichtung zur Herstellung eines UOE-Stahlrohrs oder Stahlröhre, Folgendes umfassend:
einen Kantenhobel, bei dem es sich um eine Abschrägungsvorrichtung (2) zum Ausbilden einer Schräge (8a, 8b) in einem Kantenteil (7a, 7b) einer Stahlplatte (7) handelt;
ein Fördersystem (3) zum Befördern der abgeschrägten Stahlplatte;
eine Stahlrohr- oder Stahlröhrenausbildungsvorrichtung mit einer C-Pressmaschine (10), ein U-Pressmaschine (11) und einer O-Pressmaschine (12) und zum Formen der abgeschrägten Stahlplatte zu einem offenen Rohr oder einer offenen Röhre; und
eine Schweißmaschine (5), um die Schrägen des offenen Rohrs oder der offenen Röhre in Anlage zu bringen und selbige zu verschweißen, wobei
die Vorrichtung ferner eine Schrägenform-Vermessungsvorrichtung (6) umfasst, um die Form der Schräge der Stahlplatte, bevor der C-Pressvorgang durch die C-Pressmaschine durchgeführt wird, durch ein Lichtschnittverfahren, welches das Kantenteil der Stahlplatte mit einem linearen Laserstrahl (16a, 16b) bestrahlt, der in der Dickenrichtung der Stahlplatte expandiert, zwischen der Abschrägungsvorrichtung (2) und der C-Pressmaschine (10) zu vermessen, und
die Schrägenform-Vermessungsvorrichtung (6) dazu ausgelegt ist, bevor der C-Pressvorgang erfolgt, aufgrund des Vermessungsergebnisses der Form der Schräge zu bestimmen, ob eine Notwendigkeit besteht, die Form der Schräge der Stahlplatte zu modifizieren und ob ein Anhaften eines Fremdkörpers wie etwa eines Bearbeitungsspans vorliegt oder nicht vorliegt.

## Revendications

1. Procédé de fabrication d'un tuyau ou tube en acier UOE dans lequel une plaque d'acier (7) est munie d'un biseau (8a, 8b) dans une partie de bord (7a, 7b) de celle-ci par un raboteur de bord,
est successivement soumise à un pressage C, pressage U, et pressage O en un tuyau ou tube ouvert, et les biseaux du tuyau ou tube ouvert (13) sont joints bout à bout et soudés, dans lequel
une forme du biseau (8a, 8b) de la plaque d'acier (7) est mesurée par une méthode de section de lumière qui irradie la partie de bord de la plaque d'acier avec un faisceau laser linéaire (16a, 16b) qui s'étend dans la direction d'épaisseur de la plaque d'acier avant le pressage C et une détermination est réalisée sur la base du résultat de mesure s'il y a un besoin de modification de la forme du biseau de la plaque d'acier et si une adhérence d'une substance étrangère telle qu'un copeau usiné est présente ou absente avant que le pressage C soit démarré.

2. Procédé de fabrication d'un tuyau ou tube en acier UOE selon la revendication 1, dans lequel
plusieurs des faisceaux laser linéaires (16a, 16b) rayonnent dans la direction d'acheminement de la plaque d'acier (7).

3. Procédé de fabrication d'un tuyau ou tube en acier UOE selon la revendication 1 ou 2, dans lequel
après que le biseau (8a, 8b) est formé, la plaque d'acier est acheminée par un rouleau d'acheminement (9) vers une machine de pressage C (10) où le pressage C est réalisé, et la forme du biseau (8a, 8b) est mesurée au voisinage du rouleau d'acheminement (9) et sur un côté de sortie de la direction d'acheminement de la plaque d'acier.

4. Appareil de fabrication d'un tuyau ou tube en acier UOE comprenant :
un raboteur de bord qui est un dispositif de formation de biseau (2) pour former un biseau (8a, 8b) dans une partie de bord (7a, 7b) d'une plaque d'acier (7) ;
un système d'acheminement (3) pour acheminer la plaque d'acier biseautée ;
un dispositif de formation de tuyau ou tube en acier incluant une machine de pressage C (10), une machine de pressage U (11), et une machine de pressage O (12), et pour façonner la plaque d'acier biseautée en un tube ou tuyau ouvert ; et
une machine de soudage (5) pour joindre bout à bout les biseaux du tuyau ou tube ouvert et les souder, dans lequel
l'appareil comprend de plus un dispositif de mesure de forme de biseau (6) pour mesurer la forme du biseau de la plaque d'acier avant que le pressage C soit réalisé par la machine de pressage C par une méthode de section de lumière qui irradie la partie de bord de la plaque d'acier avec un faisceau laser linéaire (16a, 16b) qui s'étend dans la direction d'épaisseur de la plaque d'acier entre le dispositif de formation de biseau (2) et la machine de pressage C (10), et
le dispositif de mesure de forme de biseau (6) configuré pour déterminer s'il y a besoin de modifier la forme du biseau de la plaque d'acier et si une adhérence d'une substance étrangère telle qu'une pastille usinée est présente ou absente avant que le pressage C soit démarré sur la base du résultat de mesure de la forme du biseau.
